# EUROPEAN PATENT APPLICATION

(11) **EP 2 894 027 A1**
(43) Date of publication of application: **15.07.2015**
(21) Application number: 13834931.1
(22) Date of filing: 05.09.2013
(51) Int. Cl.: B29D 30/30, B60C 5/00, B60C 19/00

(54) **FIBER COATING DEVICE FOR TIRES AND METHOD FOR FIBER COATING TIRES**

(30) Priority: 06.09.2012 JP 2012196244
(71) Applicant: Bridgestone Corporation, Tokyo 104-8340 (JP)
(72) Inventor: WATANABE, Toshiyuki, Kodaira-shi Tokyo 187-8531 (JP); ISHIHARA, Taiga, Kodaira-shi Tokyo 187-8531 (JP); WAKI, Yoshiyuki, Kodaira-shi Tokyo 187-8531 (JP)
(74) Representative: Oxley, Robin John George
(86) International application number: PCT/JP2013/005271
(87) International publication number: WO 2014/038207

(57) **Abstract**

The present invention provides a fiber coating device for tires, for coating an inner surface of a tire with fibers, comprising: a tire support means for supporting a tire; a fiber supply means including a fiber jetting outlet and adapted to spray fibers from the fiber jetting outlet onto an inner surface of the tire supported by the tire support means; and a fiber charging means for charging the fibers sprayed from the fiber jetting outlet, wherein the fiber jetting outlet of the fiber supply means and the fiber charging means are disposed in a space defined by the inner surfaces of the tire and a pair of imaginary disc-shaped faces of which circumferential peripheries correspond to inner circumferential peripheries of respective bead portions of the tire when the tire is supported by the tire support means.

## Description

### TECHNICAL FIELD

The present invention relates to a fiber coating device for tires, for coating an inner surface of a tire with fibers, and a fiber coating method for tires, for coating an inner surface of a tire with fibers.

### BACKGROUND ART

There has been known a tire in which numberless fibers have been fixedly attached to an inner surface thereof by adhesive for the purpose of reducing cavity resonance noise caused by a hollow annular tube inside the tire (e.g. PTL 1). PTL 1 discloses as a method for manufacturing such a tire as described above a method including coating an inner surface of a tire with adhesive, charging numberless fibers, and electrostatically attaching the fibers to the inner surface of the tire such that the fibers fixedly stand erect on the inner surface as a curved face, of the tire.

### CITATION LIST

### Patent Literature

PTL 1: JP2004-082387 Laid-Open

### SUMMARY OF THE INVENTION

### Technical Problems

The method for fixedly attaching fibers to an inner surface of a tire of PTL 1 had to be implemented by using a general-purpose fiber coating device not specifically designed for application to tires. It is therefore difficult in PTL 1 to manufacture such a tire as described efficiently.

The present invention aims at solving the aforementioned problem of the prior art and an object thereof is to provide a fiber coating device for tires and a fiber coating method for tires, which allow efficient coating of an inner surface of a tire with fibers.

### Solution to the Problems

A fiber coating device for tires of the present invention is a fiber coating device for tires, for coating an inner surface of a tire with fibers, and comprises: a tire support means for supporting a tire; a fiber supply means including a fiber jetting outlet and adapted to spray fibers from the fiber jetting outlet onto an inner surface of the tire supported by the tire support means; and a fiber charging means for charging the fibers sprayed from the fiber jetting outlet, wherein fiber coating device is structured such that the fiber jetting outlet of the fiber supply means and the fiber charging means can be disposed in a space defined by the inner surfaces of the tire and a pair of imaginary disc-shaped faces of which circumferential peripheries correspond to inner circumferential peripheries of respective bead portions of the tire when the tire is supported by the tire support means.

The term "tire" may represent either a vulcanized tire or a green tire prior to vulcanization in the present specification and claims attached thereto.

A fiber coating method for tires of the present invention is a fiber coating method for tires, for coating an inner surface of a tire with fibers by using the fiber coating device for tires of the present invention, and comprises the steps of: supporting a tire by the tire support means of the fiber coating device for tires; disposing the fiber jetting outlet of the fiber supply means and the fiber charging means in a space defined by inner surfaces of the tire supported by the tire support means and a pair of imaginary disc-shaped faces of which circumferential peripheries correspond to inner circumferential peripheries of respective bead portions of the tire; spraying fibers onto an inner surface of the tire by the fiber supply means of the fiber coating device for tires; and charging the fibers by the fiber charging means of the fiber coating device for tires, either simultaneously with or prior to or after spraying the fibers by the fiber supply means.

### Advantageous Effect of the Invention

According to the fiber coating device for tires and the fiber coating method for tires of the present invention, it is possible to coat an inner surface of a tire with fibers efficiently.

### BRIEF DESCRIPTION OF THE DRAWINGS

FIG. 1 is a front view showing a fiber coating device for tires according to one embodiment of the present invention in a state where a tire is supported by a tire support means thereof.
FIG. 2 is a front view showing the tire support means of FIG. 1, as well as the tire (depicted by phantom lines) supported by the tire support means, in an enlarged manner.
FIG. 3 is a side view on the right-hand side of the tire support means of FIG. 2 in a state where the tire is supported by the tire support means.
FIG. 4 is a view showing in an enlarged manner a roll and a mesh plate of a fiber supply means in FIG. 1.
FIG. 5 is a flowchart showing one embodiment of a fiber coating method for tires of the present invention.

### DESCRIPTION OF THE EMBODIMENTS

An embodiment of the present invention will be described with reference to the drawings hereinafter.

The descriptions below are provided only for a demonstration purpose and structures, effects, and the like of respective members are not limited thereto.

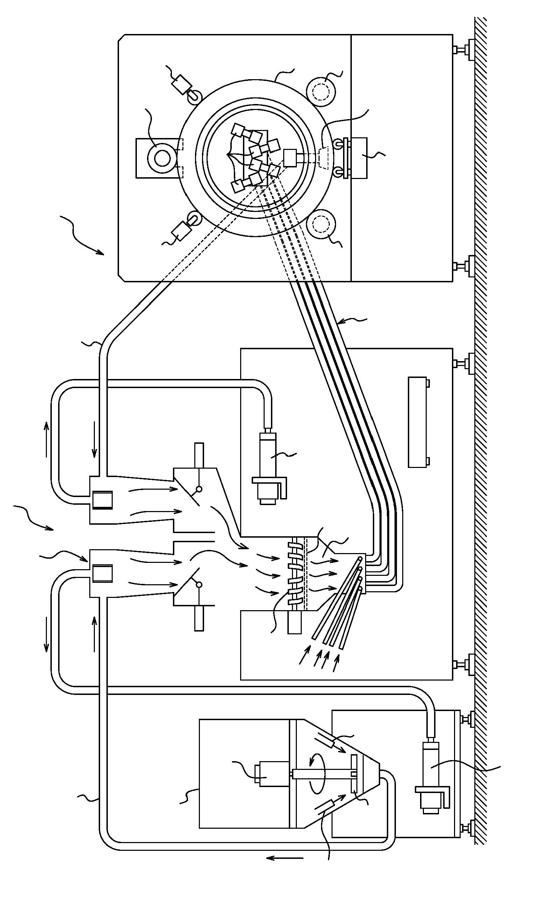

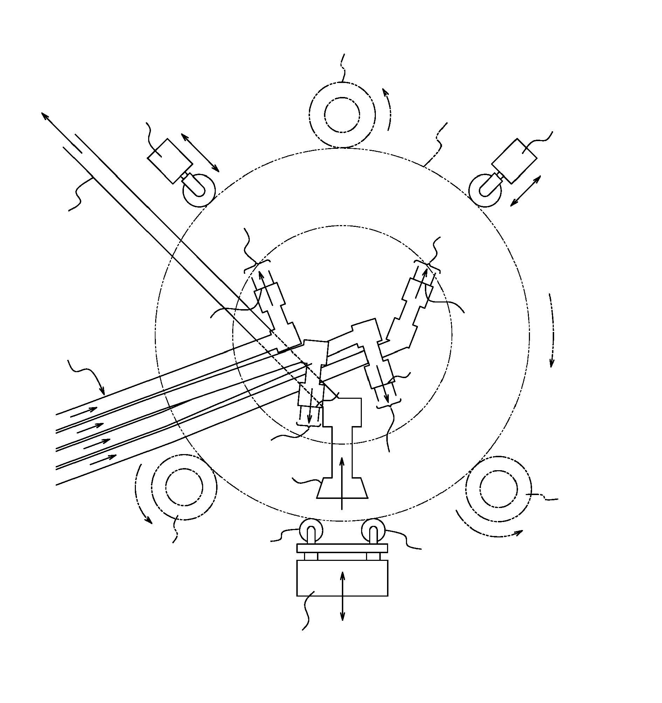

A fiber coating device for tires, exemplarily shown in FIG. 1, has: a tire support means 100 for supporting a tire 500; a fiber supply means 200 including a fiber jetting outlet 250 as shown in FIG. 2 and adapted to spray numerous fibers from the fiber jetting outlet 250 onto an inner surface of the tire 500 supported by the tire support means 100; and a fiber charging means constituted of electrodes 260 as shown in FIG. 2 for charging the fibers sprayed from the fiber jetting outlet 250.

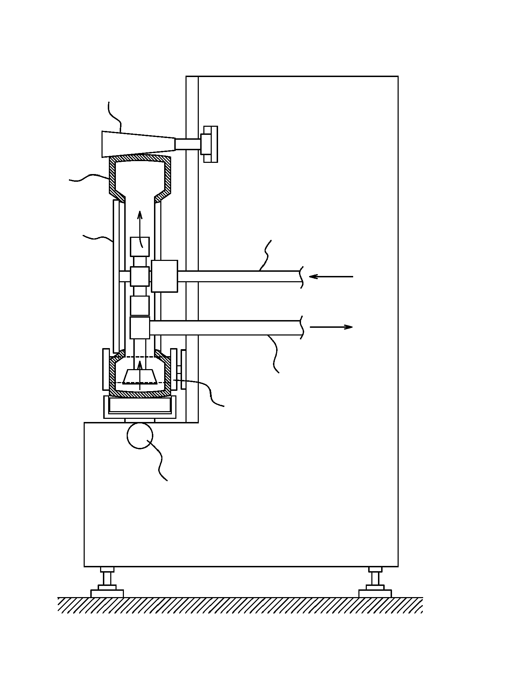

FIG. 1 includes a front view of the tire support means 100 and FIG. 2 is a front view of the tire support means 100 itself. FIG. 3 is a side view on the right-hand side of the tire support means 100. The tire support means 100 includes two driving shafts 111 for supporting the tire 500 on the underside of the tire and a driven shaft 112 for supporting the tire 500 on the upper side of the tire in the present embodiment.
The two driving shafts 111 are driven by a servomotor or the like and capable of rotating the tire 500 around the axis thereof. The driven shaft 112 is rotated around the axis thereof in synchronization with the rotation of the tire 500. The rotation speed of the tire 500 may be set, for example, in the range of 0.6 rpm to 90 rpm and preferably in the range of around 5 rpm to 10 rpm.
It is possible to spray fibers evenly over the entire inner surface of the tire 500 along the circumferential direction thereof and scatter the fibers accumulating on the inner surface in the circumferential direction of the tire 500 by rotating the tire 500 around the axis thereof, so that the inner surface of the tire 500 can be uniformly and efficiently coated with the fibers.
The tire may be supported and rotated by another structure (not shown). For example, the tire may be rotated by driving a driving shaft connected to a tire cover described below.

The driven shaft 112 tapers off toward one side in the axial direction of the tire 500 as shown in FIG. 3 (the right-hand side in the drawing), to prevent the tire 500 from being misaligned in the axial direction thereof in the present embodiment.

At least one of the driving shaft 111 and the driven shaft 112 may be constituted of a conductive material so as to serve as an earthing means for electrical earthing of the tire 500. The tire 500 is earthed by a conductive body 130 in contact with a side portion of the tire 500, as well, in the present embodiment, as shown in FIG. 3. The tire 500 can be reliably earthed regardless of a rotation condition thereof because the conductive body 130 is in contact with the side portion of the tire. Electrical earthing of the tire 500 allows the charged fibers to be more strongly drawn to an inner surface of the tire 500 than otherwise, whereby an operation of coating the inner surface of the tire 500 with fibers can be more efficiently carried out.

A tire vibration means 120 may be provided so as to be positioned under the tire 500 when the tire is supported by the tire support means 100, as shown in FIG. 2. The tire vibration means 120 supports the tire 500 by two wheels 121. The tire vibration means 120 is capable of being vertically vibrated by a vibration motor or the like (not shown), thereby vibrating the tire 500 in a substantially vertical direction to cause the fibers in the tire 500 to jump on the inner peripheral surface of the tire, so that the inner surface of the tire 500 can be more efficiently coated with the fibers.

An air cylinder (synonymous with a tire-hitting cylinder in the present specification) 140 driven substantially in the radial direction of the tire 500 may be provided so as to be positioned above the tire 500 when the tire is supported by the tire support means 100. It is possible to drop fibers accumulated in vicinities of an inner peripheral surface on the upper side of the tire 500 by driving the air cylinder 140 and hitting the tire 500, as described below.

A tire cover 150 of which circumferential periphery corresponds to an inner circumferential periphery of a bead portion of the tire 500 may be provided on at least one side in the axial direction of the tire 500 (the left-hand side in FIG. 3) so that the tire cover 150 is assembled with the bead portion, to prevent the fibers in the tire 500 from splashing out of the tire 500, as shown in FIG. 3. Provision of the tire cover 150 improves work efficiency, reduces operation time, and can also reduce an amount of fibers to be sprayed from the fiber jetting outlet 250.

Next, the fiber supply means 200 will be described. A fiber storage hopper 210 of the fiber supply means 200 stores fibers therein. The fiber supply means 200 rotates a vane 212, buried in the fibers, by a stirring motor 211 and injects air onto the fibers through an air injection outlet 213, so that the fibers stored in the fiber storage hopper 210 are loosened, as shown in FIG. 1.
Pressure is then decreased by a vacuum generation device 231, whereby the fibers are transferred from the bottom portion of the fiber storage hopper 210 to a fiber separation means 215 via a conduit 214. A flowmeter for measuring a flow rate of air may be provided in the conduit 214 so that the fibers are sucked by only a necessitated amount.

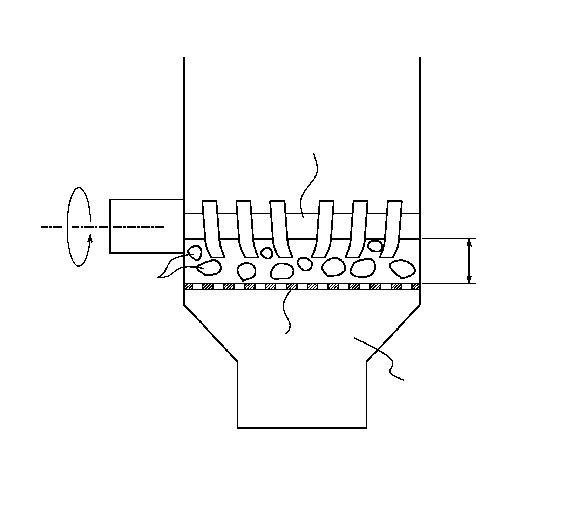

The fiber separation means 215 has a roll 221 provided with a brush and a mesh plate 222 is provided under the roll 221 of the fiber separation means 215, as shown in FIG. 1 and FIG. 4. The fibers 600 transferred to the fiber separation means 215 are further loosened and fragmented by the roll 221, shifted by the mesh plate 222, and eventually drop into a fiber supply chamber 240. The pore diameter of the mesh plate 222 may be set to be, e.g. around 10 mm, and a distance h between the lower end of a shaft portion of the roll 221 and the upper surface of the mesh plate 222 maybe set to be, e.g. in the range of 2 to 3 mm.
The fibers may be separated through vibration of the mesh plate without using a brush.

The fiber supply chamber 240 provided under the mesh plate 222 is connected to conduits 251 each having as one end thereof the fiber jetting outlet 250. The fibers in the fiber supply chamber 240 are carried via the conduits 251 and sprayed onto inner surfaces of the tire 500 through the fiber jetting outlets 250 by compressed air. In the present embodiment, four conduits 251 are connected to the fiber supply chamber 240 and the fiber jetting outlets 250 of these conduits 251 are oriented in different directions so as to spray fibers in different directions, respectively, when the fiber jetting outlets 250 spray fibers onto the inner surfaces of the tire. As a result, it is possible to carry out the operation of coating the inner surfaces of the tire with fibers more efficiently than otherwise.

A fiber charging means constituted of electrodes 260 protruding in a fiber-spraying direction is provided at each fiber jetting outlet 250, as shown in FIG. 2. High voltage, e.g. 30 kV or less (generally in the range of 20 kV to 25 kV), is applied to these electrodes 260. The fibers sprayed from each fiber jetting outlet 250 are charged by the voltage of the electrodes 260 and drawn to the inner surfaces of the tire to stand erect thereon. The fibers are charged after each fiber jetting outlet 250 has sprayed them in the present embodiment. Alternatively, the fibers may be charged either prior to or simultaneously with spraying of the fibers.

An excess fiber sucking means may be constituted of: a fiber sucking inlet 270 provided in the vicinity of an inner surface on the lower side of the tire 500 supported by the tire support means 100, so as to face the inner surface; a conduit 271; and a vacuum generation device 232. The excess fiber sucking means sucks in the free fibers which have not attached to the inner surfaces of the tire 500 to remain inside the tire to expel the fibers from the interior of the tire 500.
Fibers tend to accumulate on the inner surface of the tire. Removing these fibers after the tire 500 is disengaged from the fiber coating device for tires would increase the number of the operation processes. However, it is possible to efficiently remove the remained fibers to enhance production efficiency by using the excess fiber sucking means described above.
The fibers sucked in by the excess fiber sucking means are transferred to the fiber separation means 215 via the conduit 271 and can be reused for a tire to be manufactured next or the like.
Alternatively, suction of the excess fibers may be carried out by mounting a dome-shaped member on a portion of the tire, e.g. a bead portion, on the opposite side of the tire cover and sucking in the fibers by a blower via the dome-shaped member for recycling.

Fibers can be efficiently attached to inner surfaces of a tire by the fiber coating device for tires of the present embodiment, as described above.

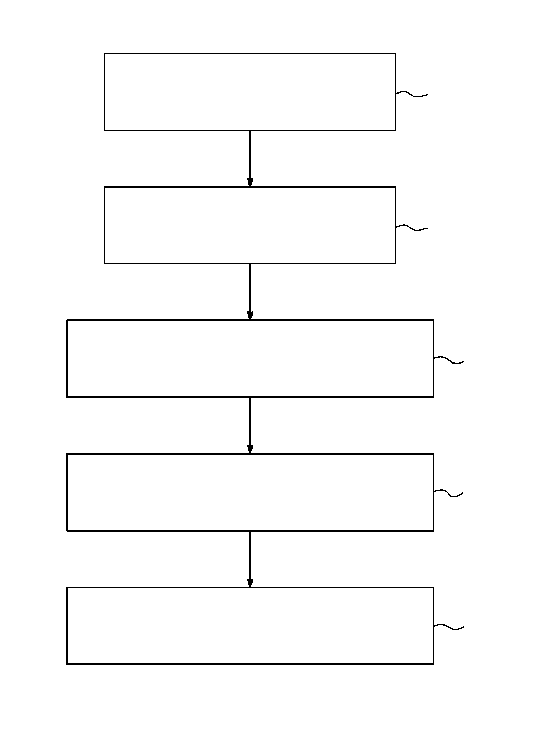

Hereinafter, a method for fixedly attaching fibers on an inner surface of the tire 500 by using the fiber coating device for tires as shown in FIG. 1 will be described with reference to FIG. 5. The tire 500 may be either a vulcanized tire or a green tire or the like prior to vulcanization.

Fibers to be fixedly attached to inner surfaces of the tire 500 are charged into the fiber storage hopper 210 of the fiber supply means 200. Examples of the fibers include organic synthetic fibers, inorganic fibers, regenerated fibers, natural fibers, and the like.
Short fibers having the average diameter in the range of 1 µm to 500 µm (inclusive of 1 µm) and the average length in the range of 2 mm to 30 mm (inclusive of 2 mm and 30 mm) are preferable as the fibers.

Examples of the organic synthetic fibers include: polyolefin such as polyethylene, polypropylene, polybutylene; aliphatic polyamide; aromatic polyamide; polyester such as polyethylene terephthalate, polyethylene naphthalate, polyethylene succinate, polymethyl methacrylate; syndiotactic-1,2-polybutadiene; acrylonitrile-butadiene-styrene copolymer; polystyrene; and copolymers thereof. These organic synthetic fibers are generally cheap, chemically stable, and exhibit high affinity with urethane-based adhesive, thereby being suitable for use in the fiber coating method for tires of the present invention.

Examples of the organic fiber include carbon fibers, glass fibers, and the like.
Examples of the regenerated fiber include rayon, cupra, and the like.
Examples of the natural fiber include cotton, silk, wool, and the like.

Adhesive or the like, e.g. urethane-based adhesive, is coated or sprayed on inner surfaces of the tire 500 for fixedly attaching the fibers thereto (Step S1 of FIG. 5). The fibers are to be fixedly attached to the portions on which the adhesive or the like has been provided. It is preferable to fixedly attach the fibers to a wide area of the inner surfaces of the tire in terms of well reducing the noise. Accordingly, the adhesive is provided preferably on the entire inner surfaces between vicinities of one bead portion and vicinities of the other bead portion in the tire axial direction.
The fibers fixedly attached to the inner surfaces of the tire absorb puncture repair liquid in fixing a puncture of the tire. Therefore, in terms of avoiding a situation in which a lot of puncture repair liquid is needed, it is acceptable to refrain from using the adhesive in a portion of the inner surfaces, e.g. vicinities of the center portion in the tire axial direction, and/or coat only a portion in the tire circumferential direction of the inner surfaces with the adhesive.

The tire 500 provided with the adhesive as described above is then mounted on the tire support means 100 of the fiber coating device for tires such that the tire support means 100 supports the tire 500 (Step S2 of FIG. 5). Further, the fiber jetting outlets 250 of the fiber supply means 200 and the fiber sucking inlet 270 are disposed in a space defined by the inner surfaces of the tire 500 and a pair of imaginary disc-shaped faces of which circumferential peripheries correspond to inner circumferential peripheries of the respective bead portions of the tire 500 (Step S3 of FIG. 5). The fiber jetting outlets 250 are oriented to face different directions, respectively. The fiber sucking inlet 270 is provided in the vicinity of an inner surface on the lower side of the tire 500 such that the fiber sucking inlet faces the inner surface. High voltage is then applied to the electrodes 260.
The tire cover 150 may be assembled with at least one of the bead portions (the bead portion on the left-hand side in the tire axial direction in FIG. 3) according to necessity. The tire 500 can be earthed in electrical terms by using at least one of the driving shafts 111, the driven shaft 112 and the conductive body 130 as the earthing means.

Next, the vacuum generation device 231 of the fiber supply means 200 is activated, whereby the fibers stored in the fiber storage hopper 210 are transferred to the fiber separation means 215. The fibers are then loosened and fragmented in the fiber separation means 215 by the roll 221 and the mesh plate 222 thereof and drop into the fiber supply chamber 240. The fibers in the fiber supply chamber 240 are carried via the conduits 251 and sprayed onto inner surfaces of the tire 500 through the fiber jetting outlets 250 by compressed air (Step S41 in FIG. 5). The fibers are charged by the high voltage electrodes 260 when the fibers are sprayed (Step S42 in FIG. 5). Alternatively, the fibers may be charged either prior to or after being sprayed.

The fibers thus charged are drawn to the inner surfaces of the tire and attached to the inner surfaces in a state where the fibers stand erect thereon. The fibers are then fixedly attached to stand erect on the inner surfaces of the tire by the adhesive provided on the inner surfaces.

The inner surfaces of the tire can be efficiently coated with fibers by the fiber coating method for tires of the present embodiment, as described above.

In this regard, the operation of coating the inner surfaces of the tire 500 with fibers can be more efficiently carried out in the case where the tire 500 is earthed because then the charged fibers are more strongly drawn to the inner surfaces of the tire, as described above.

The tire 500 is rotated around the axis thereof by the driving shafts 111 when the fibers are being sprayed through the fiber jetting outlets 250 and thereafter in the present embodiment. As a result, it is possible to spray the fibers evenly over the entire inner surface of the tire 500 along the circumferential direction thereof and scatter the fibers accumulating on the inner surface in the circumferential direction of the tire 500, whereby the fibers can be efficiently fixed to the inner surfaces of the tire 500. Specifically, the fibers can be attached to the inner surfaces of the tire 500 in a satisfactorily fixed manner by rotating the tire 5 to 10 times at the rotation speed in the range of, e.g. 0.6 rpm to 90 rpm.
The tire 500 may be vibrated in a substantially vertical direction by the tire vibration means 120 to cause the fibers in the tire 500 to jump on the inner surfaces of the tire 500 during a period from the start of spraying fibers through the fiber jetting outlets 250 to the completion of fixation of the fibers to the inner surfaces of the tire 500, so that the inner surface of the tire 500 can be more efficiently coated with the fibers. Further, the air cylinder 140 may be driven to hit the upper side of the tire 500 to cause the fibers accumulated in vicinities of an inner peripheral surface on the upper side of the tire 500 to drop, so that the inner surface of the tire 500 can be more efficiently coated with the fibers.

When the inner surfaces of the tire 500 have been coated with the fibers, the vacuum generation device 232 of the excess fiber sucking means may be activated so that the free fibers which have not attached to the inner surfaces of the tire 500 to remain inside the tire are sucked in through the fiber sucking inlet 270 and expelled from the interior of the tire 500. As a result, the free fibers which have not attached to the inner surfaces of the tire 500 can be efficiently removed. The fibers sucked in by the excess fiber sucking means are transferred to the fiber separation means 215 and can be reused for a tire to be manufactured next.

### REFERENCE SIGNS LIST

- 100: Tire support means
- 111: Driving shaft (Earthing means)
- 112: Driven shaft (Earthing means)
- 120: Tire vibration means
- 121: Wheels
- 130: Conductive body (Earthing means)
- 140: Air cylinder (Tire-hitting cylinder)
- 150: Tire cover
- 200: Fiber supply means
- 210: Fiber storage hopper
- 211: Stirring motor
- 212: Vane
- 213: Air injection outlet
- 214, 251: Conduit
- 215: Fiber separation means
- 221: Roll
- 222: Mesh plate
- 231: Vacuum generation device
- 232: Vacuum generation device (Excess fiber sucking means)
- 240: Fiber supply chamber
- 250: Fiber jetting outlet
- 260: Electrode (Fiber charging means)
- 270: Fiber sucking inlet (Excess fiber sucking means)
- 271: Conduit (Excess fiber sucking means)
- 500: Tire
- 600: Fiber

## Claims

1. A fiber coating device for tires, for coating an inner surface of a tire with fibers, comprising:
a tire support means for supporting a tire;
a fiber supply means including a fiber jetting outlet and adapted to spray fibers from the fiber jetting outlet onto an inner surface of the tire supported by the tire support means; and
a fiber charging means for charging the fibers sprayed from the fiber jetting outlet,
wherein the fiber jetting outlet of the fiber supply means and the fiber charging means are disposed in a space defined by the inner surfaces of the tire and a pair of imaginary disc-shaped faces of which circumferential peripheries correspond to inner circumferential peripheries of respective bead portions of the tire when the tire is supported by the tire support means.

2. The fiber coating device for tires of claim 1, further comprising a tire rotation means for rotating the tire supported by the tire support means around the axis of the tire.

3. The fiber coating device for tires of claim 1 or 2, further comprising an excess fiber sucking means for sucking in free fibers which have not attached to the inner surfaces of the tire supported by the tire support means to remain inside the tire, to expel the free fibers from the interior of the tire.

4. The fiber coating device for tires of any of claims 1 to 3, further comprising a tire vibration means for vibrating the tire supported by the tire support means in a direction substantially orthogonal to the axial direction of the tire.

5. The fiber coating device for tires of any of claims 1 to 4, further comprising a tire cover provided on at least one side in the axial direction of the tire supported by the tire support means, so as to be assembled with the corresponding bead portion, for covering a corresponding imaginary disc-shaped face of which circumferential periphery corresponds to an inner circumferential periphery of the bead portion.

6. The fiber coating device for tires of any of claims 1 to 5, wherein the fiber supply means includes a plurality of the fiber jetting outlets and said fiber jetting outlets are oriented to face different directions, respectively.

7. The fiber coating device for tires of any of claims 1 to 6, further comprising an earthing means for electrical earthing of the tire supported by the tire support means.

8. A fiber coating method for tires, for coating an inner surface of a tire with fibers by using the fiber coating device for tires of any of claims 1 to 7, comprising the steps of:
supporting a tire by the tire support means of the fiber coating device for tires;
disposing the fiber jetting outlet of the fiber supply means and the fiber charging means in a space defined by inner surfaces of the tire supported by the tire support means and a pair of imaginary disc-shaped faces of which circumferential peripheries correspond to inner circumferential peripheries of respective bead portions of the tire;
spraying fibers onto an inner surface of the tire by the fiber supply means of the fiber coating device for tires; and
charging the fibers by the fiber charging means of the fiber coating device for tires, either simultaneously with or prior to or after spraying the fibers by the fiber supply means.
